# FASCICULE DE BREVET EUROPEEN

(11) **EP 1 029 932 B1**
(45) Date de publication et mention de la délivrance du brevet: **21.04.2004**
(21) Numéro de dépôt: 00400380.2
(22) Date de dépôt: 10.02.2000
(51) Int. Cl.: C21D 9/32

(54) **Procédé de traitement thermique d'une roue dentée en acier**
Verfahren zur Wärmebehandlung eines Zahnrades aus Stahl
Process for heat treatment of steel gear wheel

(30) Priorité: 19.02.1999 FR 9902067
(43) Date de publication de la demande: 23.08.2000
(73) Titulaire: Renault s.a.s., 92100 Boulogne Billancourt (FR); SAET, 10040 Leini (IT)
(72) Inventeur: Bonzano, Giorgio, 10040 Leini (IT); 2Chevre, Pascal, 33600 Pessac Bordeaux (FR); Criqui, Bernard, 92150 Suresnes (FR)

(56) Documents cités:
- DE-A- 2 449 237
- DE-B- 1 055 568
- DE-B- 1 233 896
- FR-A- 2 687 169
- US-A- 4 675 488
- US-A- 4 885 831

## Description

L'invention concerne un procédé de traitement thermique par induction selon deux fréquences, moyenne et haute, d'une roue dentée en acier.

L'invention concerne plus particulièrement un procédé de traitement thermique par induction selon deux fréquences, moyenne et haute, d'une roue dentée en acier, notamment d'une roue ou d'un pignon d'une boîte de vitesses de véhicule automobile, du type dans lequel la roue dentée est soumise à une première opération de chauffage par induction à moyenne fréquence pour durcir des fonds de la denture de la roue dentée, du type dans lequel la roue dentée est soumise à une deuxième opération de chauffage par induction à haute fréquence pour durcir des flancs de la denture de la roue dentée, et du type dans lequel la roue dentée est soumise à une opération de refroidissement rapide pour réaliser une trempe superficielle des fonds et des flancs de la denture de la dent.

On connaît de nombreux exemples de procédés de traitement thermique par induction de roues dentées en acier.

Le traitement thermique par induction selon deux fréquences des contours d'une roue dentée sur une seule couche est connu de longue date. L'utilisation d'un inducteur d'une fréquence élevée permet d'assurer lors du chauffage une formation d'austénite sur les flancs des dents de la denture, tandis que l'utilisation simultanée d'un inducteur d'une fréquence moyenne permet d'assurer lors du chauffage une formation d'austénite sur les fonds des dentures. Une trempe ultérieure à l'eau permet de transformer l'austénite en martensite.

Un problème se pose au niveau des zones de raccord entre les flancs des dents et les fonds de la denture. On a en effet constaté que ces zones présentaient une formation incomplète d'austénite. En effet, dans ce cas, une partie de la ferrite constitutive du matériau initial n'est pas transformée en austénite par le chauffage. Par suite, lors de la trempe, cette ferrite résiduelle ne peut se transformer en martensite, et la denture de la roue se trouve fragilisée précisément dans cette zone.

Pour remédier à cet inconvénient, on a proposé de réaliser un chauffage de la roue dentée par induction selon deux fréquences de façon à obtenir une roue dentée présentant deux couches de martensite.

Ce procédé de traitement thermique est notamment décrit et représenté par le document FR-A-2.687.169.

Ce document décrit et représente un procédé de traitement thermique qui consiste à réaliser tout d'abord une opération de chauffage par induction à moyenne fréquence de la couche superficielle visible de la roue dentée et de la sous-couche située juste en dessous. Cette opération permet d'obtenir deux couches de martensite à grain fin de duretés différentes.

Cette opération est suivie d'une trempe qui prépare la couche et la sous-couche pour un revenu. Ce revenu est obtenu par une opération de chauffage à moyenne fréquence qui agit sur la couche superficielle et sur la sous-couche, tandis qu'une opération simultanée de chauffage à haute fréquence, qui n'agit que sur la couche superficielle, provoque une deuxième austénitisation de cette couche. S'ensuit alors une seconde trempe.

On obtient ainsi une roue dentée comportant, de l'extérieur vers l'intérieur, trois couches de duretés décroissantes que sont la couche superficielle, la sous-couche, et le noyau.

Ce procédé de traitement thermique résout le problème des raccords entre fond de denture et flanc de dents, mais il est d'une part long et, d'autre part, il peut conduire à des déformations de denture nécessitant de réaliser des corrections avant usinage qui dépendent en particulier des lots de matériau utilisé.

Pour remédier à ces inconvénients, l'invention propose un procédé de traitement thermique rapide permettant de réduire les contraintes internes auxquelles est soumis le matériau de la roue dentée.

Dans ce but, l'invention propose un procédé de traitement thermique du type précédemment décrit, caractérisé en ce que la première opération de chauffage est adaptée pour réaliser une opération de transformation en austénite des fonds de la denture de la roue dentée, entre les première et deuxième opérations de chauffage, la roue dentée est soumise à une opération intermédiaire de refroidissement pour laisser la chaleur diffuser vers le centre de chaque dent de la denture et diminuer les contraintes de déformation de la roue dentée, la seconde opération de chauffage est adaptée pour réaliser une opération de transformation en austénite des flancs de la denture de la roue dentée et pour réaliser une deuxième opération de transformation en austénite des fonds de la denture de la roue dentée.

Selon d'autres caractéristiques de l'invention :
- la première opération de chauffage est une opération de chauffage d'une durée inférieure à une seconde et de haute densité de puissance surfacique délivrée par un premier inducteur à la surface de la dent,
- la durée de la première opération de chauffage et la puissance surfacique délivrée par le premier inducteur à la surface de la dent sont choisies pour que la température des fonds de la denture de la roue dentée atteigne environ 1000°C,
- l'opération intermédiaire de refroidissement est obtenue par transfert de la roue dentée d'un premier inducteur réalisant la première opération de chauffage à un deuxième inducteur réalisant la deuxième opération de chauffage,
- la durée du transfert est choisie pour que la température au centre de la dent monte à 400°C et pour que la température des fonds de la denture de la roue dentée descende à 600°C,
- la deuxième opération de chauffage est une opération de chauffage d'une durée inférieure ou égale à 0,5 seconde et de très haute densité de puissance surfacique délivrée par un deuxième inducteur à la surface de la dent,
- la durée de la deuxième opération de chauffage et la puissance surfacique délivrée par le deuxième inducteur à la surface de la dent sont choisies pour que la température des fonds de la denture de la roue dentée atteigne une valeur supérieure à environ 1000°C, la température au centre de la dent restant à environ 400°C,
- la durée de montée en puissance du deuxième inducteur est inférieure à 0,05 seconde,
- la troisième opération de refroidissement rapide est une opération de trempe à l'eau permettant la formation de martensite sur les flancs et les fonds de la denture de la roue dentée,
- la roue dentée est une roue dentée cylindrique à denture hélicoïdale,
- les inducteurs sont des inducteurs dont les brins sont éventuellement perpendiculaires au profil d'hélice de la denture conformément à la demande de brevet FR9603575 déposée par la demanderesse.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique de dessus d'une roue dentée après la première opération de chauffage ;
- la figure 2 est une vue de dessus de la roue dentée après l'opération intermédiaire de refroidissement ;
- la figure 3 est une vue de dessus de la roue dentée après la deuxième opération de chauffage ;
- la figure 4 est un diagramme illustrant la variation de la température des fonds de denture de la roue dentée en fonction du temps lors de ces trois opérations.

Dans la description qui va suivre, des chiffres de référence identiques désignent des éléments identiques ou ayant des fonctions similaires.

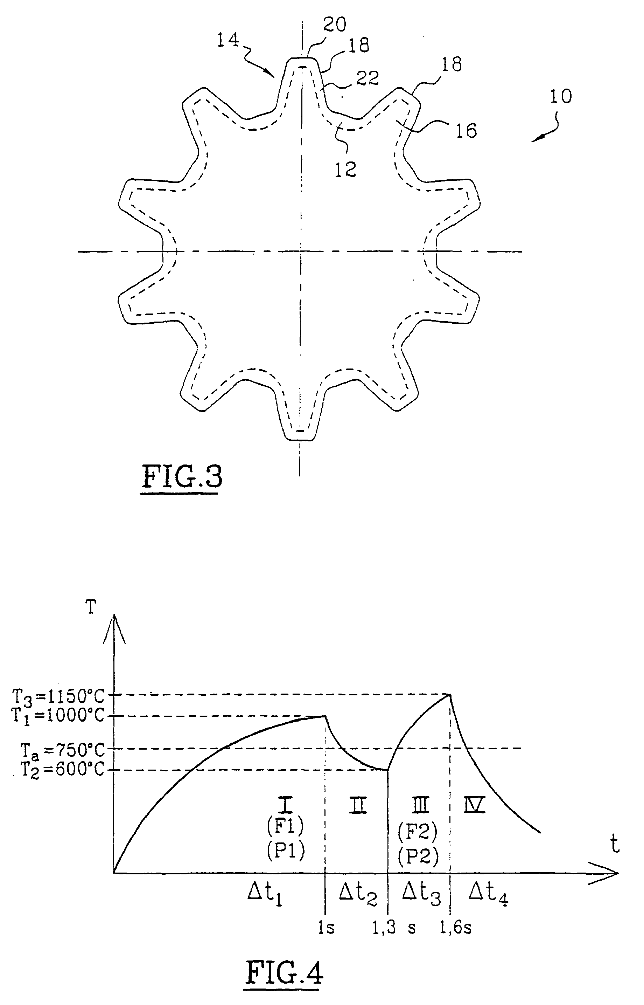

On a représenté sur la figure 4 les différentes étapes d'un cycle de chauffage réalisé par un procédé de traitement par induction selon l'invention suivant deux fréquences f₁ et f₂.

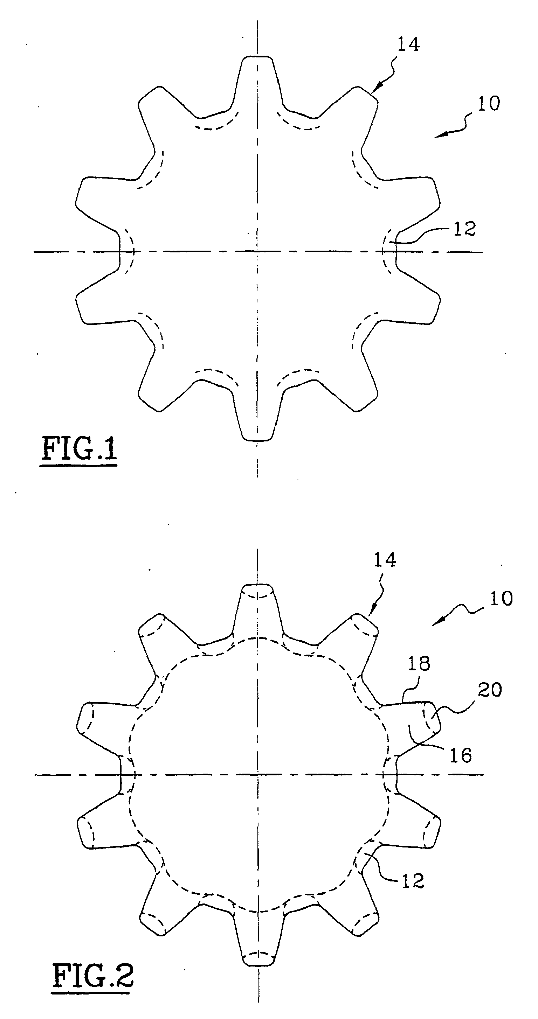

Le diagramme de la figure 4 illustre la température T des fonds d'une denture 12 d'une roue dentée 10 représentée aux figures 1 à 3 en fonction du temps t écoulé depuis le début de la mise en oeuvre du procédé. La roue 10 dentée est, dans le mode de réalisation préféré de l'invention, une roue dentée 10 à denture 14 hélicoïdale du type de celles couramment utilisées dans les boîtes de vitesses de véhicule automobile. La denture 14 comporte des dents 18 dont chacune comporte des flancs 22 comportant une extrémité 20, et un centre 16. Les dents 18 sont séparées les unes des autres par des fonds de denture 12.

Comme l'illustre la figure 4, la roue dentée 10 représentée aux figures 1 à 3 est tout d'abord soumise à une première opération de chauffage I qui est, de manière connue, une opération de chauffage par induction à moyenne fréquence f₁ . Cette première opération I de chauffage est réalisée par un premier inducteur (non représenté) qui est adapté au type de denture 14 de la roue dentée 10 à traiter. Dans le mode de réalisation préféré de l'invention, le premier inducteur est un inducteur annulaire dont les brins sont perpendiculaires au profil d'hélice de la denture 14 de la roue 10.

A titre d'exemple, et de façon non limitative de l'invention, pour une roue dentée 10 comportant un module de denture de l'ordre de 2,5, la fréquence f₁ utilisée par le premier inducteur est de l'ordre de 2,5 kHz.

Conformément à l'invention, cette première opération I de chauffage est réalisée sous une forte puissance P₁ et est d'une durée Δt₁ très courte, inférieure à une seconde. Ainsi, à titre d'exemple et de façon non limitative de l'invention, cette première opération I de chauffage est réalisée par le premier inducteur avec une densité de puissance P₁ réelle de l'ordre de 6KW/cm² et elle dure une seconde, comme l'illustre le diagramme de la figure 4.

Il est connu que la durée d'une opération de chauffage et la puissance réelle délivrée par un inducteur sont inversement proportionnelles. Dans le cas présent, ces paramètres sont choisis pour que la température T₁ à la surface des fonds 12 de la denture 14 de la roue dentée 10 atteigne 1000°C à la fin de la première opération I de chauffage. Ceci est obtenu par le fait que la moyenne fréquence f₁ de 2,5 kHz du premier inducteur ne permet un échauffement élevé que des surfaces qui sont éloignées du premier inducteur, et notamment des fonds 12 de la denture 14.

Cette première opération I de chauffage permet par conséquent aux fonds 12 de denture, en franchissant une température Tₐ d'austénisation de 750°C qui est représentée sur le diagramme de la figure 4, d'austéniser une première fois les fonds 12 de la denture 14 de la roue dentée 10 suivant une épaisseur d'environ 1 mm.

Conformément à l'invention, la roue dentée 10 est ensuite soumise à une première opération II de refroidissement, qui est une opération intermédiaire entre la première opération I de chauffage et une deuxième opération III ultérieure de chauffage, afin de diffuser la chaleur dans le centre 16 de chaque dent 18.

Cette première opération de refroidissement II est avantageusement réalisée par le simple transfert de la roue dentée 10 du premier inducteur à moyenne fréquence f₁ vers un deuxième inducteur à haute fréquence f₂ qui sera utilisé lors de la deuxième opération de chauffage III. Cette première opération II de refroidissement est de durée Δt₂ très courte, c'est-à-dire inférieure à 0,5 seconde. Ainsi, à titre d'exemple et de façon non limitative de l'invention, la première opération II intermédiaire de refroidissement illustrée à la figure 4 est d'une durée Δt₂ de 0,3 seconde.

A l'issue de cette première opération intermédiaire II de refroidissement, la température T des fonds 12 de denture 14 de la roue dentée 10 redescend en dessous de la température Tₐ d'austénisation de 750°C, afin de permettre ultérieurement une ré-austénisation de la ferrite résiduelle que les fonds 12 de denture contiennent. Ainsi, par exemple, à l'occasion de cette première opération II de refroidissement, la température T des fonds 12 de la denture 14 redescend à une température T₂ de l'ordre de 600°C, tandis que la chaleur diffuse vers le centre 16 de chaque dent 18, ce qui permet porter la température du centre 16 de chaque dent 18 à une température proche d'environ 400°C.

On remarquera que, à l'issue de cette première opération intermédiaire II de refroidissement, les extrémités 20 des dents 18 de la denture 14, qui n'ont quasiment pas été touchées par le chauffage à moyenne fréquence f₁ de la première opération I de chauffage, restent à une température bien inférieure aux températures respectives du centre 16 de chaque dent 18 et T₂ du fond de denture 12 de la denture 14.

On réalise alors à l'aide du deuxième inducteur la deuxième opération III de chauffage par induction à haute fréquence f₂. De manière connue, pour une roue dentée 10 ayant par exemple un module de denture de 2,5, cette opération de chauffage par induction à haute fréquence f₂ est réalisée sous une fréquence f₂ de 120 kHz de façon à provoquer une transformation de la ferrite en austénite seulement à la surface de la roue dentée 10, et suivant une couche très fine.

La haute fréquence f₂ de cette deuxième opération III de chauffage permet en effet de ne toucher que la surface ou "peau" de la denture 14. Cette deuxième opération III de chauffage est réalisée suivant une durée Δt₃ très courte, c'est-à-dire inférieure à 0,3 seconde comme l'illustre la figure 4, et le deuxième inducteur monte très rapidement en puissance sur une durée de l'ordre de 0.05 seconde.

Ainsi, le deuxième inducteur délivre une très forte densité de puissance P₂, de l'ordre de 10kW/cm², ce qui contribue à l'obtention de "l'effet de peau", la chaleur pénétrant moins dans le centre 16 de chaque dent 18, celui-ci restant à la température de préchauffage de l'ordre de 400°C. On réalise ainsi une austénisation des extrémités 20 et, des flancs 22 des dents 18, et une deuxième austénisation des fonds 12 de la denture 14. Cette deuxième austénisation des fonds 12 de la denture présente l'avantage d'affiner la taille du grain austénitique au niveau des fonds 12 ce qui contribue à augmenter la tenue en fatigue de la denture 14.

A l'issue de cette deuxième opération III de chauffage, la température T des fonds 12 de denture dépasse les 1000°C. Ceci correspond dans la pratique à une température T₃ de 1150°C comme illustré par exemple à la figure 4.

Comme la fréquence f₂ délivrée par le deuxième inducteur est beaucoup plus élevée que la fréquence f₁ délivrée par le premier inducteur, la quantité de ferrite transformée en austénite lors de cette deuxième opération III de chauffage est proportionnellement plus importante sur les flancs 22 et sur les extrémités 20 des dents 18 que sur les fonds 12 de denture 14, mais comme les fonds 12 de denture 14 ont déjà été préalablement austénétisés par la première opération I de chauffage, le résultat global à la surface de la peau de la denture 14 de la roue dentée 10 est que, à l'issue de la deuxième opération III de chauffage, l'austénitisation du matériau de la roue dentée 10 est uniforme sur les extrémités 20, les flancs 22 et les fonds 12 de la denture 14, et ce sur une épaisseur d'environ 1 mm.

Le centre 16 de chaque dent 18 n'est quant à lui pratiquement pas touché par le chauffage par induction du deuxième inducteur et reste à la température de préchauffage de 400°C.

Enfin, comme l'illustre la figure 4, à l'issue de ces trois opérations, une opération IV de trempe rapide est réalisée durant une durée Δt₄ très courte. Celle-ci a pour but de faire chuter brutalement la température T des fonds 12 de la roue dentée 10 et de réaliser une transformation de l'austénite formée suivant la couche uniforme de 1mm, représentée à la figure 3, en une couche uniforme de martensite de très haute dureté. Avantageusement, cette trempe est une trempe à l'eau sous pression.

Ainsi, le procédé de traitement thermique selon l'invention permet d'obtenir une roue dentée 10 présentant sur toute sa peau périphérique une couche martensitique uniforme de faible profondeur d'environ 1 mm et de très haute dureté et la mise en oeuvre de ce procédé ne nécessite que des temps d'opération très courts, ce qui représente un gain de coût appréciable en termes de fabrication en grande série.

## Revendications

1. Procédé de traitement thermique par induction selon deux fréquences moyenne (f₁) et haute (f₂) d'une roue dentée (10) en acier, notamment une roue ou un pignon d'une boîte de vitesses de véhicule automobile, du type dans lequel la roue (10) dentée est soumise à une première opération (I) de chauffage par induction à moyenne fréquence (f₁) puis à une deuxième opération (III) de chauffage par induction à haute fréquence (f₂), et du type dans lequel la roue dentée (10) est soumise à une opération (IV) de refroidissement rapide pour réaliser une trempe superficielle des fonds (12) et des flancs (22) de la denture (14) de la roue (10), **caractérisé en ce que**
- la première opération (I) de chauffage est adaptée pour réaliser une opération de transformation en austénite des fonds (12) de la denture de la roue dentée (10),
- entre les première (I) et deuxième (III) opérations de chauffage, la roue dentée (10) est soumise à une opération intermédiaire (II) de refroidissement pour laisser la chaleur diffuser vers le centre (16) de chaque dent (18) de la denture (14) et diminuer les contraintes de déformation de la roue dentée (10),
- la seconde opération (III) de chauffage est adaptée pour réaliser une opération de transformation en austénite des flancs (22) de la denture (14) de la roue dentée (10) et pour réaliser une deuxième opération de transformation en austénite des fonds (12) de la denture (14) de la roue dentée (10).

2. Procédé de traitement thermique selon la revendication 1, **caractérisé en ce que** la première opération (I) de chauffage est une opération de chauffage d'une durée (Δt₁) inférieure à une seconde et de haute densité de puissance surfacique (P₁) délivrée par un premier inducteur à la surface de la dent (18).

3. Procédé selon la revendication 2, **caractérisé en ce que** la durée (Δt₁) de la première opération de chauffage et la puissance surfacique (P,) délivrée par le premier inducteur à la surface de la dent (18) sont choisies pour que la température (T₁) des fonds (12) de la denture (14) de la roue dentée (10) atteigne environ 1000°C.

4. Procédé de traitement selon la revendication 3, **caractérisé en ce que** l'opération intermédiaire (II) de refroidissement est obtenue par transfert de la roue dentée (10) du premier inducteur réalisant la première opération (I) de chauffage à un deuxième inducteur réalisant la deuxième opération (III) de chauffage.

5. Procédé selon la revendication 4, **caractérisé en ce que** la durée du transfert (Δt₂) est choisie pour que la température au centre de la dent monte à 400°C et pour que la température (T) des fonds (12) de la denture (14). de la roue dentée (10) descende à 600°C.

6. Procédé de traitement thermique selon l'une quelconque des revendications 4 ou 5, **caractérisé en ce que** la deuxième opération (III) de chauffage est une opération de chauffage d'une durée (Δt₃) inférieure à 0,5 seconde et de très haute densité de puissance (P₂) surfacique délivrée par un deuxième inducteur à la surface de la dent (18).

7. Procédé selon l'une quelconque des revendications 4 à 6, **caractérisé en ce que** la durée (Δt₃) de la deuxième opération (III) de chauffage et la puissance (P₂) surfacique délivrée par le deuxième inducteur à la surface de la dent (18) sont choisies pour que la température (T) des fonds (12) de la denture (14) de la roue dentée (10) atteigne une valeur supérieure à environ 1000°C, la température au centre de la dent restant à environ 400°C.

8. Procédé selon l'une quelconque des revendications 6 ou 7 prise en combinaison avec l'une quelconque des revendications 4 ou 5, **caractérisé en ce que** la durée de montée en puissance du deuxième inducteur est inférieure à 0,05 seconde.

9. Procédé selon l'une quelconque des revendications précédentes, **caractérisé en ce que** l'opération (IV) de refroidissement rapide est une opération de trempe à l'eau permettant la formation de martensite sur les flancs (22) et les fonds (12) de la denture (14) de la roue dentée (10).

10. Procédé selon l'une quelconque des revendications précédentes, **caractérisé en ce que** la roue dentée est une roue dentée à denture hélicoïdale et les inducteurs sont des inducteurs dont les brins sont perpendiculaires au profil d'hélice de la denture.

## Patentansprüche

1. Verfahren zur Wärmebehandlung eines Zahnrades (10) aus Stahl durch Induktion gemäß zwei Frequenzen, einer mittleren Frequenz (f₁) und einer hohen Frequenz (f₂), insbesondere eines Rads oder eines Ritzels eines Getriebes eines Kraftfahrzeugs von dem Typ, in welchem das Zahnrad (10) einer ersten Erhitzungsoperation (I) durch Induktion bei einer mittleren Frequenz (f₁) ausgesetzt wird, dann einer zweiten Erhitzungsoperation (III) durch Induktion bei einer hohen Frequenz (f₂) und von dem Typ, in welchem das Zahnrad (10) einer raschen Abkühlungsoperation (IV) ausgesetzt wird, um eine oberflächliche Abschreckung der Böden (12) und der Flanken (22) der Zahnung (14) des Rades (10) zu verwirklichen,
**dadurch gekennzeichnet, dass**
- die erste Erhitzungsoperation (I) angepasst ist, um einen Vorgang einer Transformation in Austenit der Böden (12) der Zahnung des Zahnrades (10) zu verwirklichen,
- zwischen den ersten (I) und zweiten (III) Erhitzungsoperationen das Zahnrad (10) einer Zwischenoperation (II) einer Abkühlung ausgesetzt wird, um die Wärme in Richtung zum Zentrum (16) jedes Zahns (18) der Zahnung (14) diffundieren zu lassen, und die Beanspruchungen einer Verformung des Zahnrads (10) zu verringern,
- die zweite Erhitzungsoperation (III) angepasst ist, um einen Vorgang einer Transformation in Austenit der Flanken (22) der Zahnung (14) des Zahnrads (10) zu verwirklichen, und um einen zweiten Vorgang einer Transformation in Austenit der Böden (12) der Zahnung (14) des Zahnrads (10) zu verwirklichen.

2. Wärmebehandlungsverfahren gemäß Anspruch 1, **dadurch gekennzeichnet, dass** die erste Erhitzungsoperation (I) eine Erhitzungsoperation von einer Dauer (Δt₁) geringer als eine Sekunde und von hoher, flächenbezogener Leistungsdichte (P₁) ist, welche durch einen ersten Induktionsapparat auf die Oberfläche des Zahns 18 gebracht wird.

3. Verfahren gemäß Anspruch 2, **dadurch gekennzeichnet, dass** die Dauer (Δt₁) der ersten Erhitzungsoperation und die oberflächenbezogene Leistung (P₁), welche durch den ersten Induktionsapparat auf die Oberfläche des Zahns (18) gebracht wird, derart ausgewählt sind, dass die Temperatur (T₁) der Böden (12) der Zahnung (14) des Zahnrads (10) in etwa 1000°C erreicht.

4. Behandlungsverfahren gemäß Anspruch 3, **dadurch gekennzeichnet, dass** die Zwischenoperation (II) einer Abkühlung durch den Transfer des Zahnrads (10) vom ersten Induktionsapparat, welcher die erste Erhitzungsoperation (I) verwirklicht, zu einem zweiten Induktionsapparat erhalten wird, wobei er die zweite Erhitzungsoperation (III) verwirklicht.

5. Verfahren gemäß Anspruch 4, **dadurch gekennzeichnet, dass** die Dauer des Transfers (Δt₂) derart ausgewählt wird, dass die Temperatur im Zentrum des Zahns auf 400°C ansteigt und dass die Temperatur (T) der Böden (12) der Zahnung (14) des Zahnrads (10) auf 600°C absinkt.

6. Wärmebehandlungsverfahren gemäß irgendeinem der Ansprüche 4 oder 5, **dadurch gekennzeichnet, dass** die zweite Erhitzungsoperation (III) eine Erhitzungsoperation von einer Dauer (Δt₃) geringer als 0,5 Sekunden und von einer hohen flächenbezogenen Leistungsdichte (P₂) ist, welche von dem zweiten Induktionsapparat auf die Oberfläche des Zahns (18) gebracht wird.

7. Verfahren gemäß irgendeinem der Ansprüche 4 bis 6, **dadurch gekennzeichnet, dass** die Dauer (Δt₃) der zweiten Erhitzungsoperation (III) und die oberflächenbezogene Leistung (P₂), welche durch den zweiten Induktionsapparat auf die Oberfläche des Zahns (18) gebracht wird, derart ausgewählt sind, dass die Temperatur (T) der Böden (12) der Zahnung (14) des Zahnrads (10) einen höheren Wert als in etwa 1000°C erreicht, wobei die Temperatur im Zentrum des Zahns bei in etwa 400°C bleibt.

8. Verfahren gemäß irgendeinem der Ansprüche 6 oder 7 in Kombination genommen mit irgendeinem der Ansprüche 4 oder 5, **dadurch gekennzeichnet, dass** die Dauer des Leistungsanstiegs des zweiten Induktionsapparates geringer als 0,05 Sekunden ist.

9. Verfahren gemäß irgendeinem der vorangegangenen Ansprüche, **dadurch gekennzeichnet, dass** die rasche Operation (IV) einer Abkühlung eine Operation eines Abschreckens in Wasser ist, welche die Bildung von Martensit auf den Flanken (22) und den Böden (12) der Zahnung (14) des Zahnrads (10) erlaubt.

10. Verfahren gemäß irgendeinem der vorangegangenen Ansprüche, **dadurch gekennzeichnet, dass** das Zahnrad ein Zahnrad mit einer sprialförmigen Zahnung ist und dass die Induktionsapparate Induktionsapparate sind, deren Adern rechtwinklig zum Spiralprofil der Verzahnung sind.

## Claims

1. A method of heat treatment by induction at two frequencies, medium (f₁) and high (f₂), of a toothed steel wheel (10), in particular a wheel or a pinion gear of a gearbox of an automobile vehicle, of the type in which the toothed wheel (10) is subject to a first induction heating operation (I) at medium frequency (f₁) then to a second induction heating operation (III) at high frequency (f₂) and of the type in which the toothed wheel (10) is subject to a rapid cooling operation (IV) to carry out surface hardening of the bases (12) and flanks (22) of the toothing (14) of the wheel (10), **characterised in that**:
- the first heating operation (I) is adapted to perform an operation to convert the bases (12) of the toothing of the toothed wheel (10) into austenite,
- between the first (I) and second (III) heating operations, the toothed wheel (10) is subject to an intermediate cooling operation (II) in order to allow the heat to diffuse towards the centre (16) of each tooth (18) of the toothing (14) and to reduce the deformation stresses on the toothed wheel (10),
- the second heating operation (III) is adapted to perform an operation to convert the flanks (22) of the toothing (14) of the toothed wheel (10) into austenite and to carry out a second operation to convert the bases (12) of the toothing (14) of the toothed wheel (10) into austenite.

2. A method of heat treatment as claimed in claim 1, **characterised in that** the first heating operation (I) is a heating operation of a duration (Δt₁) of less than one second and of high surface power density (P₁) supplied by a first inductor to the surface of the tooth (18).

3. A method as claimed in claim 2, **characterised in that** the duration (Δt₁) of the first heating operation and the surface power (P₁) supplied by the first inductor to the tooth surface (18) are selected such that the temperature (T₁) of the bases (12) of the toothing (14) of the toothed wheel (10) reaches approximately 1000°C.

4. A method of treatment of claimed in claim 3, **characterised in that** the intermediate cooling operation (II) is obtained by transferring the toothed wheel (10) from the first inductor performing the first heating operation (I) to a second inductor performing the second heating operation (III).

5. A method as claimed in claim 4, **characterised in that** the length of the transfer (Δt₂) is selected such that the temperature at the centre of the tooth rises to 400°C and the temperature (T) of the bases (12) of the toothing (14) of the toothed wheel (10) drops to 600°C.

6. A method of heat treatment as claimed in any one of claims 4 or 5, **characterised in that** the second heating operation (III) is a heating operation of a duration (Δt₃) of less than 0.5 seconds and of very higher surface power density (P₂) supplied by a second inductor to the surface of the tooth (18).

7. A method as claimed in any one of claims 4 to 6, **characterised in that** the duration (Δt₃) of the second heating operation (III) and the surface power (P₂) supplied by the second inductor to the surface of the tooth (18) are selected such that the temperature (T) of the bases (12) of the toothing (14) of the toothed wheel (10) reaches a value greater than approximately 1000°C, the temperature at the centre of the tooth remaining at approximately 400°C.

8. A method as claimed in any one of claims 6 or 7 taken together with any one of claims 4 or 5, **characterised in that** the length of power increase of the second inductor is lower than 0.05 seconds.

9. A method as claimed in any one of the preceding claims, **characterised in that** the rapid cooling operation (IV) is a water quenching operation enabling the formation of martensite on the flanks (22) and the bases (12) of the toothing (14) of the toothed wheel (10).

10. A method as claimed in any one of the preceding claims, **characterised in that** the toothed wheel is a cylindrical toothed wheel with a helical toothing and **in that** the inductors are inductors whose sections are perpendicular to the helical profile of the toothing.
